# EUROPEAN PATENT APPLICATION

(11) **EP 4 152 746 A1**
(43) Date of publication of application: **22.03.2023**
(21) Application number: 21803246.4
(22) Date of filing: 14.05.2021
(51) Int. Cl.: H04N 13/361, H04N 7/18, H04N 13/239, H04N 13/344

(54) **REMOTE CONTROL SYSTEM, REMOTE-WORKING APPARATUS, VIDEO-PROCESSING APPARATUS, AND PROGRAM**

(30) Priority: 14.05.2020 JP 2020085305
(71) Applicant: NTT Communications Corporation, Tokyo 100-8019 (JP)
(72) Inventor: NAKAKURA, Toshiya, Tokyo 100-8019 (JP)
(74) Representative: Nederlandsch Octrooibureau
(86) International application number: PCT/JP2021/018475
(87) International publication number: WO 2021/230363

(57) **Abstract**

In a remote control system including a user apparatus and a remote operation apparatus, the remote operation apparatus includes a first imaging device having a first viewing angle and a second imaging device having a second viewing angle that includes the first viewing angle and that is greater than the first viewing angle, and transmits a first video image obtained by the first imaging device and a second video image obtained by the second imaging device to the user apparatus via a network. The user apparatus combines the first video image and the second video image with their coordinate positions and time positions aligned to generate a third video image, and outputs the generated third video image to a display unit.

## Description

### FIELD

Embodiments of the present invention relate generally to, for example, a remote control system, in which a user apparatus controls via a network a remote operation apparatus located in a remote location, and a remote operation apparatus, a video image processing apparatus, and a program used in the system.

### BACKGROUND

A system has been developed in which a user remotely controls via a network an operation apparatus located in a remote location while watching a video image displayed on a display device. In a system of this type, for example, a head mounted display (HMD) (hereinafter also referred to as a headset) is put on, for example, the head of a user. A user moves his/her body while watching a video image captured by a robot located in a remote location through a headset, thereby remotely controlling the motion of the robot (see, for example, Patent Literature 1).

### CITATION LIST

### PATENT LITERATURE

Patent Literature 1: Jpn. Pat. Appln. KOKAI Publication No. 2019-106628

### SUMMARY

### TECHNICAL PROBLEM

However, in a general remote control system, there are two problems when a user tries to watch a video image of a remote location, as will be described below. One is that a camera provided in a remote operation apparatus, such as a robot, is generally a single-lens camera; therefore, information in the depth direction is lost in a video image captured by the camera, so that the user cannot recognize the front and rear of an object and operability is deteriorated. In order to reduce this problem, a technique has been proposed in which two cameras are arranged to imitate human eyes, and a stereoscopic video image is generated and displayed by, for example, a headset based on the captured video image. This technique is known as "stereoscopic", for example. However, even if this technique is used, the viewing angle is still smaller than that of the human eye, and it is difficult for the user to obtain sufficient visibility.

Another problem is that depth information is lost and an object cannot be grasped as a three dimensional object. In order to solve this problem, there is a method of acquiring a video image in a wide range by using, for example, a 360-degree camera. However, the 360-degree camera has another problem in that it is necessary to process a 360-degree omnidirectional video image using, for example, a sensor or a video image processing unit provided in the camera, which causes deterioration in image quality or increases a drawing delay in video imaging.

The invention has been made in consideration of the circumstances described above, and to provide a technique for improving both a viewing angle and an image quality of a video image obtained in a remote operation apparatus.

### SOLUTION TO PROBLEM

In order to solve the above-mentioned problems, a first aspect of the present invention relates to a remote control system including a user apparatus and a remote operation apparatus that operates in response to a control signal transmitted from the user apparatus via a network in response to a user operation. The remote operation apparatus includes a first imaging device having a first viewing angle and a second imaging device having a second viewing angle that includes the first viewing angle and that is greater than the first viewing angle. Then, the remote operation apparatus transmits a first video image obtained by the first imaging device and a second video image obtained by the second imaging device to the user apparatus via the network. On the other hand, the user apparatus includes a reception unit, a video composition unit, and a display unit. The reception unit receives the first video image and the second video image transmitted from the remote operation apparatus via the network. The video composition unit combines the received first video image and second video image with their coordinate positions and time positions aligned to generate a third video image. The display unit displays the generated third video image.

A second aspect of the present invention relates to a remote operation apparatus that operates in response to a control signal transmitted from a user apparatus via a network in accordance with a user operation. The remote operation apparatus includes a first imaging device having a first viewing angle and a second imaging device having a second viewing angle that includes the first viewing angle and that is greater than the first viewing angle, and further includes a video composition unit and a transmission unit. The video composition unit combines a first video image obtained by the first imaging device and a second video image obtained by the second imaging device with their coordinate positions and time positions aligned to generate a third video image. The transmission unit transmits the generated third video image to the user apparatus via the network.

A third aspect of the present invention relates to a video image processing apparatus provided in either a user apparatus or a remote operation apparatus of a remote control system including the user apparatus and the remote operation apparatus, the remote operation apparatus being operated in response to a control signal transmitted from the user apparatus via a network in response to a user operation, the remote operation apparatus including a first imaging device having a first viewing angle and a second imaging device having a second viewing angle that includes the first viewing angle and that is greater than the first viewing angle. The video image processing apparatus includes a video composition unit and an output unit. The video composition unit combines a first video image obtained by the first imaging device and a second video image obtained by the second imaging device with their coordinate positions and time positions aligned to generate a third video image. The output unit outputs the generated third video image.

### ADVANTAGEOUS EFFECTS OF INVENTION

According to the first aspect of the present invention, in the remote operation apparatus, the video images captured by the first and second imaging devices that have different viewing angles are transmitted to the user apparatus. In the user apparatus, the video images transmitted from the remote operation apparatus are combined with their coordinate positions and time positions aligned, and are displayed to the user. Therefore, the user can be provided with a high-quality video image having a sense of depth, for example, by the video image obtained by the first imaging device in a main gaze range that includes the user's line-of-sight direction. On the other hand, in a peripheral region outside the gaze range, the user can be provided with a video image in a wide viewing angle.

According to the second aspect of the present invention, in the remote operation apparatus, the video images captured by the first and second imaging devices having different viewing angles are combined with their coordinate positions and time positions aligned, and are transmitted to the user apparatus. As a result, the combined video image is displayed in the user apparatus. Therefore, the user can be provided with a high-quality video image having a sense of depth, for example, by the video image obtained by the first imaging device in a main gaze range that includes the user's line-of-sight direction. On the other hand, in a peripheral region outside the gaze range, the user can be provided with a video image in a wide viewing angle.

According to the third aspect of the present invention, the video images captured by the first and second imaging devices that are provided in the remote operation apparatus and that have different viewing angles are combined by a video image processing apparatus provided in either the remote operation apparatus or the user apparatus, and are provided for display in the user apparatus. Therefore, the user can be provided with a high-quality video image having a sense of depth, for example, by the video image obtained by the first imaging device in a main gaze range that includes the user's line-of-sight direction. On the other hand, in a peripheral region outside the gaze range, the user can be provided with a video image in a wide viewing angle.

Thus, according to each aspect of the present invention, it is possible to provide a technique for improving both a viewing angle and an image quality of a video image obtained in a remote operation apparatus.

### BRIEF DESCRIPTION OF THE DRAWINGS

FIG. 1 is a diagram showing an overall configuration of a remote control system according to a first embodiment of the present invention.
FIG. 2 is a block diagram showing a hardware configuration of a robot used as a remote operation apparatus in the remote control system shown in FIG. 1.
FIG. 3 is a block diagram showing a hardware configuration of a head mounted display worn by a user in the remote control system shown in FIG. 1.
FIG. 4 is a block diagram showing a hardware configuration of an information processing apparatus used as a user apparatus in the remote control system shown in FIG. 1.
FIG. 5 is a block diagram showing a software configuration of the information processing apparatus used as the user apparatus in the remote control system shown in FIG. 1.
FIG. 6 is a flowchart showing procedures and details of processing executed by the information processing apparatus shown in FIG. 5.
FIG. 7 is a diagram showing a first example of a composite video image generated by the information processing apparatus shown in FIG. 5.
FIG. 8 is a diagram showing a second example of a composite video image generated by the information processing apparatus shown in FIG. 5.
FIG. 9 is a diagram showing a third example of a composite video image generated by the information processing apparatus shown in FIG. 5.
FIG. 10 is a diagram showing another arrangement example of the camera provided in the robot.

### DETAILED DESCRIPTION

Embodiments of the present invention will be described below with reference to the drawings.

### <First Embodiment>

### (Configuration Example)

### (1) System

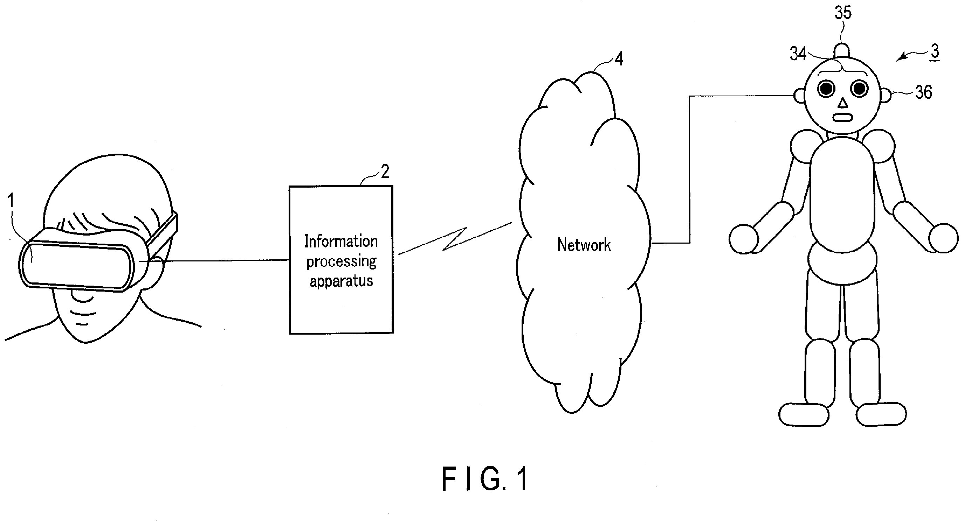

FIG. 1 is a diagram showing an overall configuration of a remote control system according to a first embodiment of the present invention.

The remote control system according to the first embodiment includes a head mounted display (HMD) 1, an information processing apparatus 2 that operates as a user apparatus, and a remote operation apparatus 3 that enables communications with the information processing apparatus 2 via a network 4. Although a case where the user apparatus includes only the information processing apparatus 2 is described here as an example, the user apparatus may include both the information processing apparatus 2 and the HMD 1.

The network 4 includes, for example, a public internet protocol (IP) network such as the Internet, and an access network for accessing the public IP network. The access network includes a local area network (LAN), a wireless LAN, a public wired network, a public mobile communication network, and a cable television (CATV) network.

### (2) Apparatus

### (2-1) Remote operation apparatus 3

The remote operation apparatus 3 is composed of, for example, a humanoid robot that operates in a remote location. The remote operation apparatus 3 is hereinafter also referred to as a robot. The robot 3 includes a body, a head, arms, and legs. Each of the head, the arms, and the legs is configured to operate within a predetermined movable range by a drive unit including a servo mechanism.

A stereoscopic camera 34 as a first imaging device is disposed in, for example, a front portion of the head of the robot 3, that is, a portion corresponding to the face. In addition, an omnidirectional camera 35 as a second imaging device is disposed in a position corresponding to, for example, the top of the head of the robot 3. Furthermore, a microphone 36 is also disposed in a position corresponding to a side of the head of the robot 3.

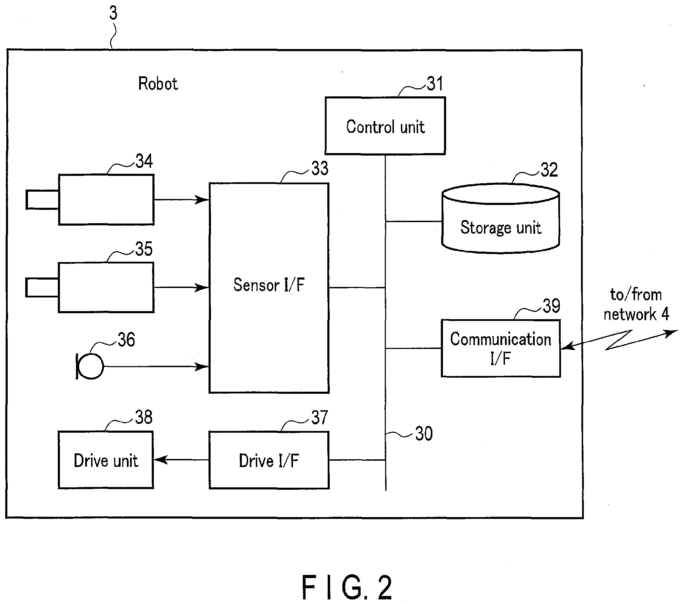

FIG. 2 is a block diagram showing a hardware configuration of the robot 3.

The robot 3 includes, for example, a control unit 31. The control unit 31 includes a hardware processor such as a central processing unit (CPU). A storage unit 32, a sensor interface (sensor I/F) 33, a drive interface (drive I/F) 37, and a communication interface (communication I/F) 39 are connected to the control unit 31 via a bus 30.

The storage unit 32 uses a non-volatile memory such as a solid state drive (SSD) that can be written and read at any time as a storage medium, and includes a program storage area and a data storage area. Various application programs for realizing operations of the robot 3 are stored in the program storage area. The data storage area is used to store various data acquired or generated in the course of operations of the robot 3. As the storage medium, a read only memory (ROM), a random access memory (RAM), or the like may also be used in combination.

The stereoscopic camera 34, the omnidirectional camera 35, and the microphone 36 are connected to the sensor I/F 33. The stereoscopic camera 34 is composed of, for example, a twin-lens camera, captures an image in the front direction of the robot 3 within a range of a first viewing angle (for example, 130 degrees), and outputs obtained video data (hereinafter referred to as stereoscopic video data) to the sensor I/F 33.

The omnidirectional camera 35 has a second viewing angle (for example, 360 degrees corresponding to the entire circumference) larger than the first viewing angle of the stereoscopic camera 34. The omnidirectional camera 35 captures images of the surroundings of the robot 3 in all directions, and outputs the captured video data (hereinafter referred to as omnidirectional video data) to the sensor I/F 33.

The microphone 36 detects sound around the robot 3, and outputs the obtained audio data to the sensor I/F 33.

A drive unit 38 for driving the head, the arms, and the legs is connected to the drive I/F 37. The drive I/F 37 converts a control signal output from the control unit 31 into a drive signal, and outputs the converted drive signal to the drive unit 38 to operate the drive unit 38. For example, the drive unit that moves the head rotates the head within a range of a predetermined angle in each of the pan and tilt directions.

The communication I/F 39 includes an interface conforming to, for example, a wireless LAN, a short-range wireless data communication standard (for example, Bluetooth (registered trademark)), or a public mobile communication network, and performs data transmission with the information processing apparatus 2 via the network 4. The communication I/F 30 may include an interface conforming to a wired network such as a public wired network, a wired LAN, or a CATV network.

The control unit 31 controls the movements of the head, the arms, and the legs in accordance with a remote control signal sent from the information processing apparatus 2. Examples of the operation to be controlled include an operation of variably controlling the imaging target range of the stereoscopic camera 34 and the omnidirectional camera 35 by controlling the direction of the head of the robot 3. Instead of the humanoid robot 3, the remote operation apparatus may be, for example, an industrial robot or simply a stand on which a monitoring camera is disposed.

Further, the control unit 31 receives, via the sensor I/F 33, stereoscopic video data captured by the stereoscopic camera 34 and omnidirectional video data captured by the omnidirectional camera 35. Then, the received stereoscopic video data and the omnidirectional video data are packetized and multiplexed in accordance with a predetermined format, and the multiplexed video data is transmitted from the communication I/F 39 to the information processing apparatus 2. At that time, audio data detected by the microphone 36 may be multiplexed with the video data and transmitted. In a case where a plurality of communication links are set in parallel between a robot 3A and the information processing apparatus 2, the stereoscopic video data and the omnidirectional video data may be transmitted as separate streams using the plurality of communication links.

At the time of packetization described above, the control unit 31 adds time data representing the imaging time or the reception time to the stereoscopic video data and the omnidirectional video data. Furthermore, the control unit 31 adds reference coordinate data indicating a relative positional relationship between respective imaging ranges to the stereoscopic video data and the omnidirectional video data. The time data and the reference coordinate data are used in a case where the stereoscopic video data and the omnidirectional video data are combined in the information processing apparatus 2 to be described later.

### (2-2) Head Mounted Display (HMD) 1

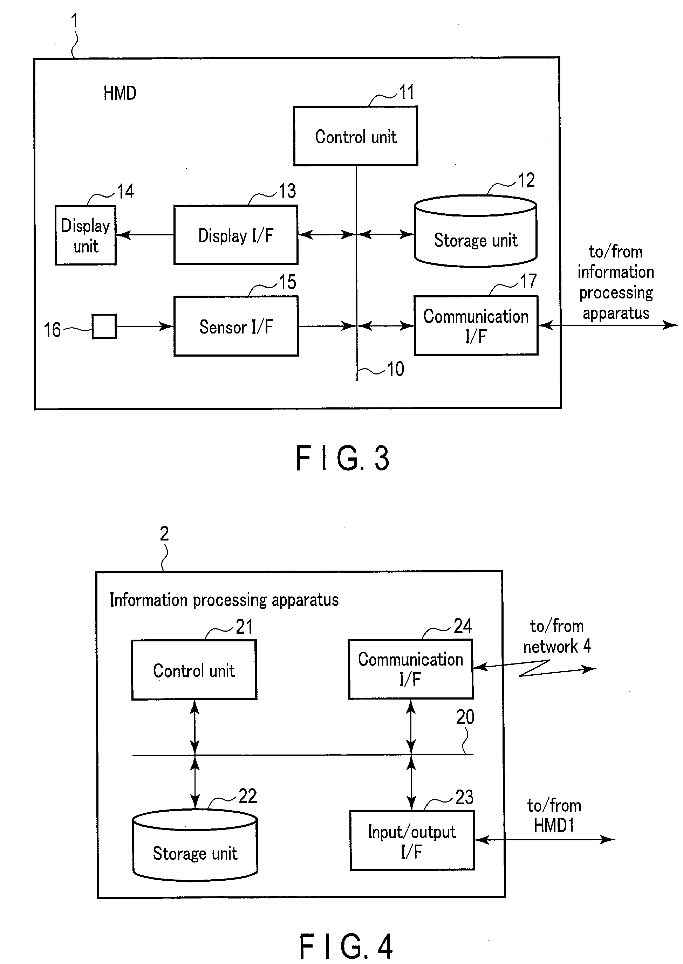

The HMD 1 has a goggle shape, for example, and is detachably mounted on the head of the user. FIG. 3 is a block diagram showing a hardware configuration of the HMD 1.

In the HMD 1, a storage unit 12, a display interface (display I/F) 13, a sensor interface (sensor I/F) 15, and a communication interface (communication I/F) 17 are connected via a bus 10 to a control unit 11 including, for example, a CPU. In addition, devices such as various switches, a microphone, a speaker, a camera, and a position sensor may be connected to the control unit 11.

The storage unit 12 uses, as a storage medium, a non-volatile memory, such as an SSD, that can be written and read at any time, and includes a program storage area and a data storage area. Various application programs for realizing operations of the HMD 1 are stored in the program storage area. The data storage area is used to store various data acquired or generated in the course of operations of the HMD 1. As the storage medium, a ROM, a RAM, or the like may also be used in combination.

A display unit 14 is connected to the display I/F 13. The display unit 14 includes, for example, two display panels including an organic electro luminescence (EL) display so as to correspond to left and right eyes of the user in order to support virtual reality (VR) display. The number of display panels may be one. The display unit 14 is not limited to the organic EL display, and may be another type of display such as a liquid crystal display (LCD) or a display using seven segments. The display I/F 13 causes the display unit 14 to display video data generated by the information processing apparatus 2 which is described later.

A motion sensor 16 is connected to the sensor I/F 15. The motion sensor 16 includes, for example, an angular velocity sensor (gyro sensor), and is used to detect a motion of the HMD 1, that is, a motion of the head of the user. The motion of the head to be detected is preferably, for example, a motion in six axis directions, but may be a motion in only two axis directions of pan and tilt. The sensor I/F 15 generates motion data representing the motion of the head of the user based on an output signal from the motion sensor 16.

In addition to the motion sensor 16, a magnetic sensor, an acceleration sensor, a position sensor, an infrared sensor, a luminance sensor, a proximity sensor, a camera, or the like may be connected to the sensor I/F 15. In addition to the motion of the head of the user, a sensor for detecting a motion of the line of sight of the user may be connected to the sensor I/F 15. The motion of the line of sight of the user can be detected, for example, with a camera that captures an image of the user's eyeball.

As the communication I/F 17, for example, a wired interface using a signal cable such as a universal serial bus (USB) cable is used. Under the control of the control unit 11, the communication I/F 17 receives the video data transmitted from the information processing apparatus 2 and transfers the motion data or the like generated by the sensor I/F 15 to the information processing apparatus 2. Note that a short-range wireless data communication standard (for example, Bluetooth (registered trademark)) may be used for the communication I/F 17.

In this example, a multi-function display including the control unit 11 and the storage unit 12 is described as an example of the HMD 1. However, the HMD 1 may be a standard or simplified display having only the display unit 14, the display I/F 13, the sensor 16, and the sensor I/F 15.

### (2-3) Information Processing Apparatus 2

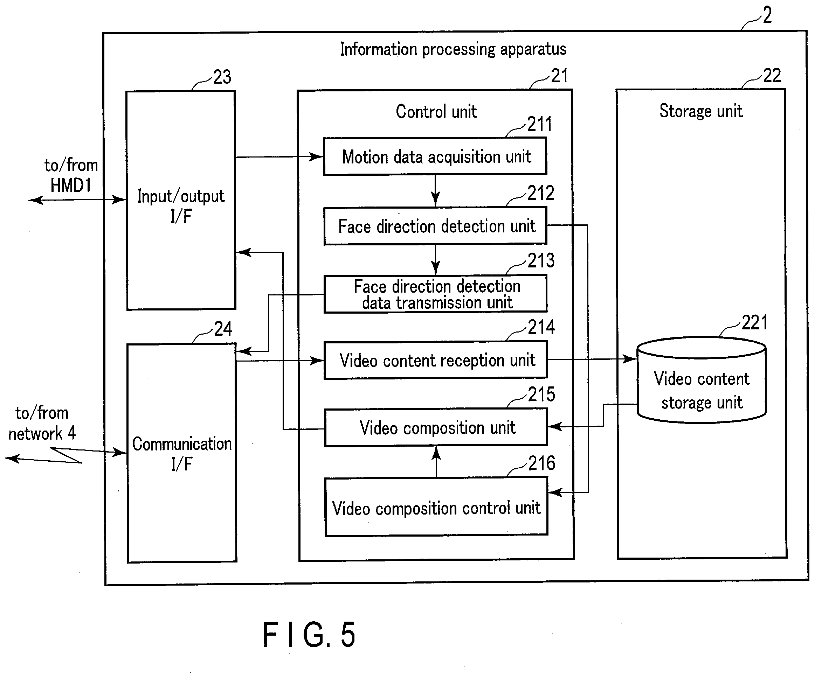

FIGS. 4 and 5 are block diagrams respectively showing hardware and software configurations of the information processing apparatus 2 used as a user apparatus.

The information processing apparatus 2 is configured by, for example, a mobile information terminal such as a smartphone or a tablet terminal, or a notebook or stationary personal computer. In the information processing apparatus 2, a control unit 21 including a hardware processor such as a CPU is connected via a bus 20 to a storage unit 22, an input/output interface (input/output I/F) 23, and a communication interface (communication I/F) 24 .

The HMD 1 is connected to the input/output I/F 23 via the USB cable or a wireless interface. Further, a controller or the like for remotely controlling the robot 3 may be connected to the input/output I/F 23.

The communication I/F 24 includes an interface supporting, for example, a wireless LAN, a short-range wireless data communication standard (for example, Bluetooth (registered trademark)), or a public mobile communication network, and performs data transmission with the robot 3 via the network 4. The communication I/F 24 may include an interface supporting a wired network such as a public wired network, a wired LAN, or a CATV network.

The storage unit 22 is configured by combining, as a storage medium, for example, a non-volatile memory such as an HDD or an SSD that can be written and read at any time, a non-volatile memory such as a ROM, and a volatile memory such as a RAM. The storage area includes a program storage area and a data storage area. The program storage area stores middleware such as an operating system (OS), and in addition, application programs necessary for executing various control processes according to the first embodiment of the present invention.

The data storage area includes a video content storage unit 221. The video content storage unit 221 is used to temporarily store the stereoscopic video data and the omnidirectional video data transmitted from the robot 3.

The control unit 21 includes, as control processing functions for realizing the first embodiment of the present invention, a motion data acquisition unit 211, a face direction detection unit 212, a face direction detection data transmission unit 213, a video content reception unit 214, a video composition unit 215, and a video composition control unit 216. These control processing functions are all realized by causing the hardware processor of the control unit 21 to execute application programs stored in the program storage area in the storage unit 22.

The motion data acquisition unit 211 performs a process of acquiring, from the HMD 1 via the input/output I/F 23, motion data representing the motion of the head of the user detected by the sensor 16 in the HMD 1.

The face direction detection unit 212 performs, for example, a process of detecting a change in the face direction of the user based on the acquired motion data. For example, based on the motion data, a process of calculating changes in the direction (angle) of the face of the user in a pan direction and a tilt direction is performed. The face direction to be detected may include not only the pan direction and the tilt direction but also other directions such as the inclination of the neck in a horizontal direction and a zoom direction.

In a case where a camera for capturing an image of the face of the user is provided on the HMD 1, the face direction detection unit 212 may have a function of detecting a change in the user's line-of-sight direction based on the video image captured by the camera.

The face direction detection data transmission unit 213 performs a process of transmitting the detected data of the face direction obtained by the face direction detection unit 212 from the communication I/F 24 to the robot 3 via the network 4.

The video content reception unit 214 receives, via the communication I/F 24, video content transmitted from the robot 3 via the network 4, that is, video data obtained by multiplexing stereoscopic video data and omnidirectional video data. Then, the video content reception unit 214 performs a process of separating and depacketizing the stereoscopic video data and the omnidirectional video data from the received multiplexed video data, and thereafter temporarily storing the depacketized data in the video content storage unit 221.

The video composition unit 215 reads the stereoscopic video data and the omnidirectional video data from the video content storage unit 221, and combines the stereoscopic video data and the omnidirectional video data based on the reference coordinate data and the time data added to these video data. Then, the combined video data is output from the input/output I/F 23 to the HMD 1.

For example, the following method can be considered as a method of combining the video images.
(1) The stereoscopic video data is simply superimposed on the omnidirectional video data with their coordinate positions and time positions aligned.
(2) After the omnidirectional video data and the stereoscopic video data are combined by (1), a process of matching at least one of a luminance, a density, and a color of one item of the data to that of the other is performed on a boundary portion in units of pixels in order to make the boundary portion inconspicuous.

The video composition control unit 216 controls the video image composition process by the video composition unit 215, and based on the detection result of the face direction by the face direction detection unit 212, performs a process of stilling or erasing the stereoscopic video image of the composite video data, or reducing the resolution of the stereoscopic video image to be lower than a predetermined value, during a period when the face direction of the user is changing.

### (Operation Example)

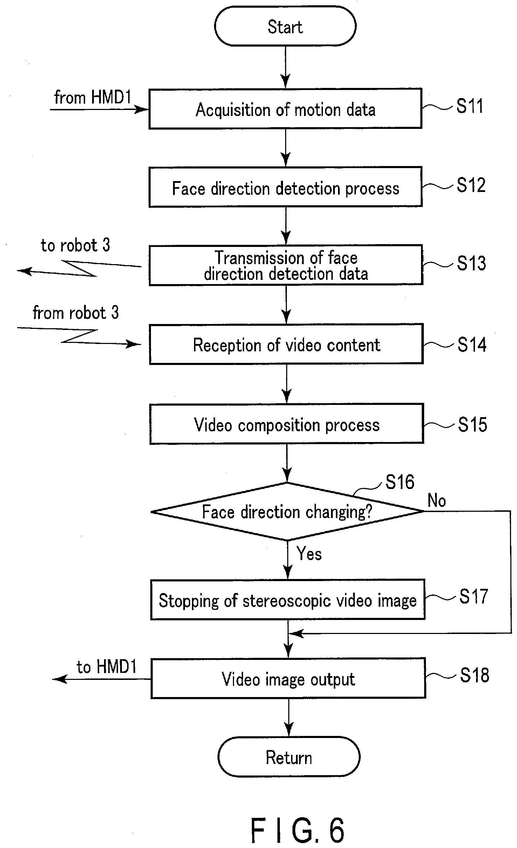

Next, an operation example of the remote control system having the aforementioned configuration will be described. FIG. 6 is a flowchart showing procedures and details of processing executed by the information processing apparatus 2.

When the user mounts the HMD 1 on his/her head and then activates the information processing apparatus 2, the communication I/F 17 of the HMD 1 and the input/output I/F 23 of the information processing apparatus 2 are first connected to each other, and further, a communication link is formed between the communication I/F 24 of the information processing apparatus 2 and the communication I/F 39 of the robot 3 via the network 4.

In this state, it is assumed that the user moves his/her head to change the face direction. Then, the motion of the head is detected by the sensor 16 of the HMD 1, and the motion data is input to the information processing apparatus 2. Under the control of the motion data acquisition unit 211, the information processing apparatus 2 acquires the motion data in step S11, and uses the face direction detection unit 212 to detect a change in the face direction of the user from the motion data in step S12.

For example, the face direction detection unit 212 calculates a change in a vector indicating the face direction of the user from a six-axis angular velocity detection signal output from an angular velocity sensor (gyro sensor). Under the control of the face direction detection data transmission unit 213, the information processing apparatus 2 transmits the detection data representing the change in the face direction of the user from the communication I/F 24 to the robot 3 in step S13.

On the other hand, upon receipt of the detection data of the face direction transmitted from the information processing apparatus 2, the robot 3 operates the drive unit 38 including, for example, a servo mechanism, via the drive I/F 37 based on the detection data of the face direction to change the direction of the head. Then, the imaging direction of the stereoscopic camera 34 mounted on the head is changed, and stereoscopic video data in a target range of imaging in the course of the change and after the change is obtained. At the same time, the omnidirectional camera 35 obtains video data over the entire circumference around the robot 3.

The control unit 31 of the robot 3 converts the obtained stereoscopic video data and omnidirectional video data into packets, multiplexes the packets, and transmits the multiplexed video data from the communication I/F 39 to the information processing apparatus 2. When the video data is packetized, the control unit 31 adds time data representing the imaging time or the reception time to the stereoscopic video data and the omnidirectional video data. Furthermore, the control unit 31 adds reference coordinate data indicating a relative positional relationship between respective imaging ranges to the stereoscopic video data and the omnidirectional video data.

In step S14, under the control of the video content reception unit 214, the information processing apparatus 2 receives the multiplexed video data transmitted from the robot 3. In step S14, the received multiplexed video data is separated into the stereoscopic video data and the omnidirectional video data, further depacketized, and temporarily stored in the video content storage unit 221.

In step S15, the control unit 21 of the information processing apparatus 2 causes the video composition unit 215 to read the stereoscopic video data and the omnidirectional video data from the video content storage unit 221. Then, the stereoscopic video data and the omnidirectional video data are combined based on the reference coordinate data and the time data added to each video data. For example, the stereoscopic video image is superimposed on the omnidirectional video image with their coordinate positions and time positions in video image frames aligned. In step S18, the video composition unit 215 outputs the combined video data from the input/output I/F 23 to the HMD 1. As a result, in the HMD1, a composite video image in which the stereoscopic video image is superimposed on the omnidirectional video image is displayed on the display.

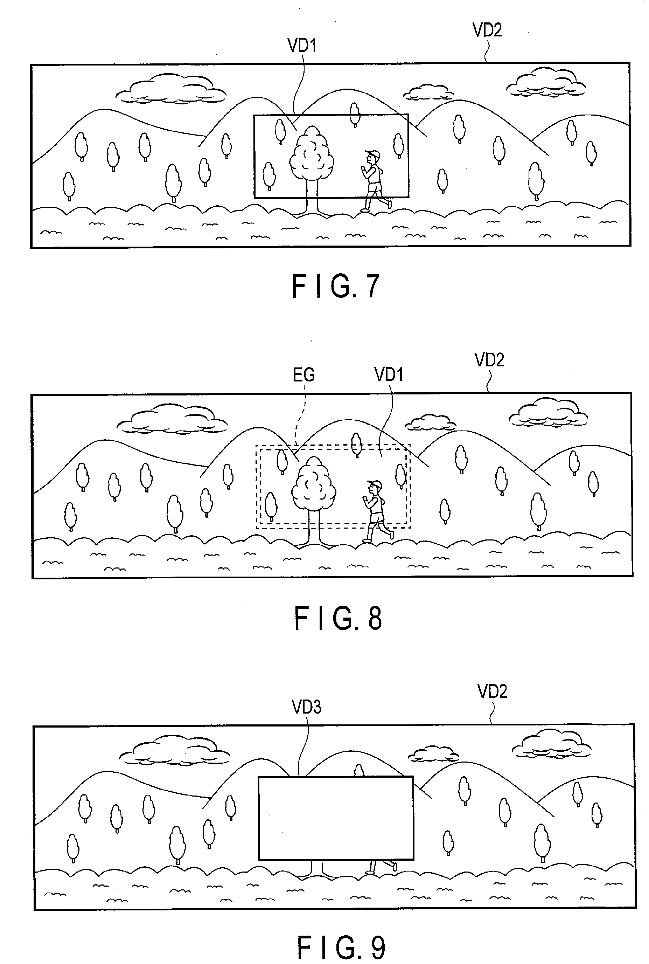

FIG. 7 shows a first example of the composite video image displayed on the HMD 1, in which a 360-degree omnidirectional video image is developed on a two-dimensional plane. In this example, a state in which a stereoscopic video image VD1 is simply superimposed on an omnidirectional video image VD2 with its position aligned is illustrated, and a state in which a boundary between the video images is displayed is illustrated.

FIG. 8 shows a second example of a composite video image displayed on the HMD 1. In this example, a process of reducing a difference in at least one of a luminance, a density, and a color in units of pixels is performed on a boundary portion between the omnidirectional video image VD2 and the stereoscopic video image VD1. Thus, it is possible to make the boundary between the omnidirectional video image VD2 and the stereoscopic video image VD1 inconspicuous.

On the other hand, in step S16, the control unit 21 of the information processing apparatus 2 determines whether or not the face direction of the user is changing under the control of the video composition control unit 216. This determination is made based on, for example, the state of the face direction detected by the face direction detection unit 212. As a result of the determination, if it is determined that the face direction of the user is changing, in step S17, the video composition control unit 216 stops the display of the stereoscopic video image VD1 in the combined video image during the period when the face direction of the user is changing. In step S18, the video composition unit 215 outputs, from the input/output I/F 23 to the HMD 1, the composite video image in which the display of the stereoscopic video image is stopped.

As a result, the composite video image in which the display of the stereoscopic video image is stopped is displayed in the HMD 1. FIG. 9 shows an example of a composite video image including a stereoscopic video image VD3 whose display is stopped. It should be noted that the display of the stereoscopic video image in the composite video image may not be stopped but may be stilled. Alternatively, the resolution may be lowered to a certain level or lower without either stopping or stilling the display. Further, the video composition unit 215 may not perform the composition process of combining the stereoscopic video image VD1 with the omnidirectional video image VD2 during a period when the face direction of the user is changing.

### <Operation and Effect>

As described above, in the first embodiment, the robot 3 is provided with the omnidirectional camera 35 in addition to the stereoscopic camera 34, and each item of video data captured by these cameras 34 and 35 is transmitted from the robot 3 to the information processing apparatus 2 on the user side via the network 4. On the other hand, upon receipt of items of video data sent from the robot 3, the information processing apparatus 2 on the user side combines the items of video data with their coordinate positions and time positions in video image frames aligned, and outputs the combined video data to the HMD 1 for display.

Thus, a video image obtained by combining the stereoscopic video image captured by the stereoscopic camera 34 and the omnidirectional video image captured by the omnidirectional camera 35 in the robot 3 is displayed in the HMD 1. Therefore, the user can be provided with a high-quality video image having a sense of depth, for example, by the stereoscopic video image obtained by the stereoscopic camera 34 in a main gaze range that includes the user's line-of-sight direction. Furthermore, the user can be provided with a video image in a wide viewing angle by the omnidirectional video image obtained by the omnidirectional camera 35 in a peripheral region outside the gaze range.

Accordingly, for example, while ensuring visibility over a wide range with the omnidirectional video image, the user can perform work while confirming a work target or a monitoring target included in the gaze range with the stereoscopic video image, and thus can efficiently perform highly accurate work or monitoring.

Furthermore, in the first embodiment, during the period when the face direction of the user is changing, the display of the stereoscopic video image in the composite video image is stopped or stilled, or alternatively, the resolution of the stereoscopic video image is lowered to a certain level or lower. For this reason, even if a display delay due to a transmission delay or a drawing delay occurs in the operation of displaying the stereoscopic video image transmitted from the robot 3 according to the motion of the head of the user, it is possible to suppress the occurrence of VR sickness in the user. At that time, only the display of the stereoscopic video image is stopped or stilled, whereas the display of the omnidirectional video image is maintained. Therefore, the user can smoothly move the direction of his/her face while checking which direction the robot 3 is facing based on the omnidirectional video image.

### <Second Embodiment>

According to the second embodiment of the present invention, in a robot 3 as a remote operation apparatus, a stereoscopic video image obtained by a stereoscopic camera 34 and an omnidirectional video image obtained by an omnidirectional camera 35 are combined in a state where coordinate positions and imaging times on image frames are aligned, and the combined image is transmitted to an information processing apparatus 2 on a user side via a network 4.

The second embodiment can be realized by providing the control unit 31 of the robot 3 with the video composition unit 215 and the video composition control unit 216 included in the control unit 21 of the information processing apparatus 2 in the first embodiment. Also in this example, the processes of the video composition unit 215 and the video composition control unit 216 can be realized by causing the hardware processor included in the control unit 31 to execute programs.

In this case, the video composition control unit 216 determines whether or not the face direction of the user is changing based on the face direction detection data transmitted from the information processing apparatus 2, and stops or stills the display of the stereoscopic video image in the composite video image generated by the video composition unit 215 during the change. Instead of determining whether or not the face direction of the user is changing based on the face direction detection data transmitted from the information processing apparatus 2, the video composition control unit 216 may determine whether or not the head of the robot 3 is moving and may stop or still the display of the stereoscopic video image in the composite video image generated by the video composition unit 215 during the period when the head of the robot 3 is moving.

According to the second embodiment of the present invention, since the video data obtained by combining the stereoscopic video image and the omnidirectional video image is generated in the robot 3 and transmitted to the information processing apparatus 2, it is possible to reduce the amount of information of the video data transmitted from the robot 3 to the information processing apparatus 2 and to reduce the transmission delay. In addition, since the information processing apparatus 2 does not need to perform a video image composition process and a video image composition control process, the processing load is reduced accordingly.

### <Other Embodiments>

(1) In the first embodiment, an example has been described in which the twin-lens camera 34 is disposed at a portion corresponding to the face of the head of the robot 3A, and the omnidirectional camera 35 is disposed at the top of the head. However, the present invention is not limited thereto, and for example, the twin-lens camera 34 that functions as a first imaging device may be disposed at a portion corresponding to the face of the robot 3A, and a wide-angle camera 35b that functions as a second imaging device may be disposed at an intermediate portion of the twin-lens camera 34.

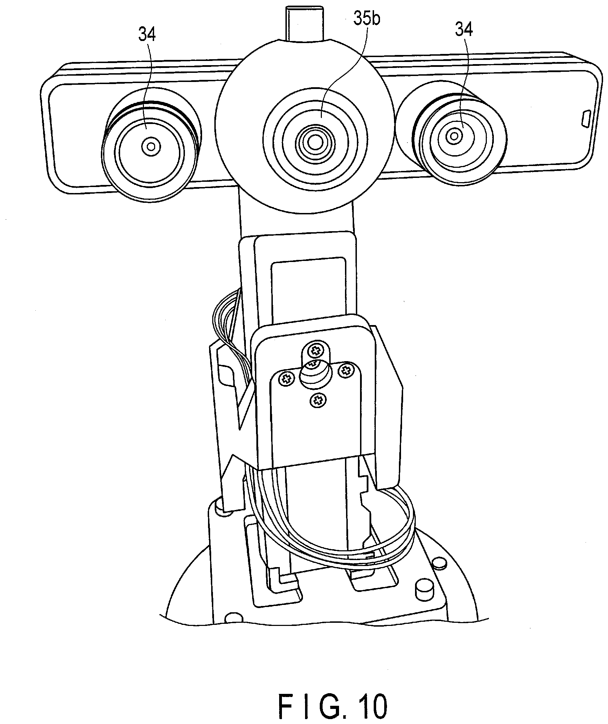

FIG. 10 shows an example of the disposition. In this example, the wide-angle camera 35b captures an image of the front direction of the robot 3A with a field of view of 180 degrees. Therefore, the viewing angle is smaller than that in the case where the omnidirectional camera 35 is used; however, with the viewing angle of 180 degrees, a video image with a sufficiently wide viewing angle close to the viewing angle of the user can be transmitted to the user apparatus, and thus a practically sufficient effect can be expected. In a case where the user intends to view a video image outside the viewing angle of the wide-angle camera 35b, the direction of the robot 3 may be changed to the pan direction by a remote operation from the user apparatus.

With the above-described configuration, the following effects and advantages can be obtained. Specifically, in the remote control system in general, upon detecting by the HMD1 that the head of the user has started to rotate, a remote control signal is transmitted from the information processing apparatus 2 to the robot 3 in a remote location via the network 4 in response to the detection. Then, in the robot 3, the direction of the head is rotated in accordance with the remote control signal to change the video data captured by the camera, and the video data is transmitted to the information processing apparatus 2 via the network 4 to be displayed on the HMD 1. For this reason, a time difference due to a transmission delay or a drawing delay occurs between the time when the user starts moving his/her head and the time when the robot video image corresponding to the motion is displayed on the HMD 1 of the user.

In contrast, according to the configuration described above, before the user starts rotating his/her head, the wide-angle video image with the viewing angle of 180 degrees is already displayed on the HMD 1 by the wide-angle camera 35b. Therefore, by this wide-angle video image, it is possible to present to the user a video image close to a robot video image obtained when the head of the user rotates. Therefore, the video image is not fixed until the video image reaches the HMD 1 of the user from the robot 3 in the remote location, and thus the inconvenience that the user suffers due to VR-sickness is reduced.

(2) In the first embodiment, an example has been described in which the robot 3 is provided with the stereoscopic camera 34 as the first imaging device and the omnidirectional camera 35 as the second imaging device. However, the present invention is not limited to this example, and a single-lens camera may be provided as the first imaging device, and a plurality of single-lens cameras arranged so as to divide an imaging range for image capturing may be provided as the second imaging device.

(3) In the second embodiment, an example has been described in which the control unit 31 of the robot 3 performs both the video image composition process of combining the stereoscopic video image with the omnidirectional video image and the control of stopping or stilling the display of the stereoscopic video image in the composite video image. However, the present invention is not limited to this example, and only the video image composition process of combining the stereoscopic video image with the omnidirectional video image may be performed by the control unit 31 of the robot 3, whereas the control of stopping or stilling the display of the stereoscopic video image in the composite video image may be performed by the information processing apparatus 2.

(4) Further, in the first and second embodiments, in order to suppress the VR sickness caused by the display delay of the video image when the user changes the face direction, the display of the stereoscopic video image that the user is mainly gazing at is stopped or stilled. However, in addition to this, the display of the omnidirectional video image may be stilled. In this way, although the user cannot confirm the direction of the robot 3, it is possible to prevent the user from suffering VR sickness in a case where the transmission delay or the drawing delay of the video data is large.

(5) In the first embodiment, the information processing apparatus 2 provided separately from the HMD 1 performs data communications with the robot 3 and video display control. However, in a case where the HMD 1 has the function of the information processing apparatus, that is, in a case where the HMD is integrated with the information processing apparatus 2, the HMD may be configured to perform data communications with the robot 3 and video display control.

(6) In addition, various improvements and modifications can be made to the type and configuration of the remote operation apparatus, the type and configuration of the first and second imaging devices, the configuration of the information processing apparatus, the procedures and details of the video image composition process and the composite control process, and the like, without departing from the scope of the invention. In other words, a specific configuration according to an embodiment may be adopted as appropriate when implementing the present invention.

The present invention should not be limited to the above-described embodiments as-is, but may be embodied by modifying the components without departing from the scope of the invention at the implementation stage. In addition, various inventions may be constituted by appropriately combining a plurality of components disclosed in the embodiments. For example, some components may be omitted from the components shown in the embodiments. Furthermore, the components of different embodiments may be suitably combined.

### REFERENCE SIGNS LIST

1 ... head mounted display (HMD)
2 ... information processing apparatus
3A, 3B ... robot
4 ... network
10, 20, 30 ... bus
11, 21, 31 ... control unit
12, 22, 32 ... storage unit
13 ... display interface (display I/F)
14 ... display unit
15, 33 ... sensor interface (sensor I/F)
16 ... motion sensor
17, 24, 39 ... communication interface (communication I/F)
23 ... input/output interface (input/output I/F)
34 ... stereoscopic camera
35 ... omnidirectional camera
35b ... wide-angle camera
36 ... microphone
37 ... drive interface (drive I/F)
38 ... drive unit
211 ... motion data acquisition unit
212 ... face direction detection unit
213 ... face direction detection data transmission unit
214 ... video content reception unit
215 ... video composition unit
216 ... video composition control unit
221 ... video content storage unit

## Claims

1. A remote control system comprising a user apparatus and a remote operation apparatus configured to operate in response to a control signal transmitted from the user apparatus via a network in response to a user operation,
the remote operation apparatus comprising:
a first imaging device having a first viewing angle;
a second imaging device having a second viewing angle that includes the first viewing angle and that is greater than the first viewing angle; and
a transmission unit configured to transmit a first video image obtained by the first imaging device and a second video image obtained by the second imaging device to the user apparatus via the network,
the user apparatus comprising:
a reception unit configured to receive the first video image and the second video image transmitted from the remote operation apparatus via the network;
a video composition unit configured to combine the received first video image and second video image with coordinate positions and time positions aligned to generate a third video image; and
an output unit configured to output the generated third video image to a display unit.

2. A remote operation apparatus configured to operate in response to a control signal transmitted from a user apparatus via a network in response to a user operation, the remote operation apparatus comprising:
a first imaging device having a first viewing angle;
a second imaging device having a second viewing angle that includes the first viewing angle and that is greater than the first viewing angle;
a video composition unit configured to combine a first video image obtained by the first imaging device and a second video image obtained by the second imaging device with coordinate positions and time positions aligned to generate a third video image; and
a transmission unit configured to transmit the generated third video image to the user apparatus via the network.

3. The remote operation apparatus according to claim 2, wherein
the first imaging device includes a stereoscopic camera having the first viewing angle, and
the second imaging device includes an omnidirectional camera having, as the second viewing angle, a viewing angle that allows imaging of an entire circumference.

4. A video image processing apparatus provided in either a user apparatus or a remote operation apparatus of a remote control system including the user apparatus and the remote operation apparatus, the remote operation apparatus being configured to operate in response to a control signal transmitted from the user apparatus via a network in response to a user operation, the remote operation apparatus including a first imaging device having a first viewing angle and a second imaging device having a second viewing angle that includes the first viewing angle and that is greater than the first viewing angle, the video image processing apparatus comprising:
a video composition unit configured to combine the first video image obtained by the first imaging device and the second video image obtained by the second imaging device with coordinate positions and time positions aligned to generate a third video image; and
an output unit configured to output the generated third video image.

5. The video image processing apparatus according to claim 4, wherein the video composition unit superimposes the first video image on the second video image with coordinate positions and time positions aligned.

6. The video image processing apparatus according to claim 4, wherein the video composition unit superimposes the first video image on the second video image with coordinate positions and time positions aligned, and performs a correction process for reducing a difference in at least one of a luminance, a density, and a color in a pixel unit with respect to a boundary portion between the first video image and the second video image.

7. The video image processing apparatus according to claim 4, wherein in a case where the user apparatus includes a detection unit configured to detect a change in a position or a direction of a head of the user, the video composition unit performs, based on a detection output by the detection unit, a process of stilling or erasing the second video image in the third video image, or reducing a resolution of the second video image in the third video image to be lower than a predetermined value, during a period when the position or the direction of the head of the user is changing.

8. A program for causing a processor included in the video image processing apparatus according to any one of claims 4 to 7 to execute processing to be performed by each of the units included in the video image processing apparatus.
